# EUROPEAN PATENT APPLICATION

(11) **EP 4 848 090 A1**
(43) Date of publication of application: **02.12.2026**
(21) Application number: 25180047.0
(22) Date of filing: 31.05.2025
(51) Int. Cl.: G06F 11/14

(54) **STATE TRANSFER SCHEDULING OF INTERNAL STATES IN AN INDUSTRIAL ENVIRONMENT**

(71) Applicant: ABB SCHWEIZ AG, 5400 Baden (CH)
(72) Inventor: JOHANSSON, Bjarne, 722 22 Västerås (SE); LEANDER, Björn, 722 33 Västerås (SE); HOLMGREN, Olof, 722 31 Västerås (SE)
(74) Representative: Kransell & Wennborg KB

(57) **Abstract**

A computer-implemented method in an industrial environment for generating a feasible scheduling of state transfer having a deadline and a period over a network (102) including at least one link (104) from a primary controller (106) configured to run at least one application (107) in the industrial environment, to a at least one backup controller (108), the method comprising: acquiring (S102), by a control unit (110) of a computer system (100), a resend budget (115) over the link for a present application, specifying a number of packets allowed to be resent within the deadline of the state transfer, applying (S104), by the control unit, a scheduling model to the state transfer and the resend budget to determine if the network between the primary controller and the backup controller can transmit a present set of application state packets of the state transfer within the deadline and given the period, providing (S106), by the control unit, an output message (121) indicating whether the state transfer is feasible on the network according to the scheduling model, and if the state transfer is determined feasible on the network according to the scheduling model, providing (S112) the output message to the primary controller.

## Description

### Field of the Invention

The present invention generally relates to a method in an industrial environment for generating a feasible scheduling of state transfer, to a computer system, and to a computer program product.

### Background

Reliable controller redundancy is critical in industrial automation systems. Traditionally, redundancy is achieved through hardware-assisted state replication, where a backup controller mirrors the internal state of a primary to enable seamless failover.

As modern controllers move toward hardware-agnostic architectures using standard Ethernet and IP-based communication, new challenges arise. These include the need to schedule state transfers efficiently across limited network links, ensure deterministic retransmission despite occasional packet loss, and apply configurable security and safety mechanisms to protect sensitive state data.

### Summary

In view of the above-mentioned and other drawbacks of the prior art, it is an object of the present invention to provide a method and system for state transfer in an industrial setting that at least partly alleviates the drawbacks of prior art.

According to a first aspect of the invention, there is provided a computer-implemented method in an industrial environment for generating a feasible scheduling of state transfer having a deadline and a period over a network including at least one link from a primary controller running at least one application in the industrial environment, to a backup controller, the method comprising: acquiring, by a control unit of a computer system, a resend budget over the link for a present application, specifying a number of packets allowed to be resent within the deadline of the state transfer, applying, by the control unit, a scheduling model to the state transfer and the resend budget to determine if the network between the primary controller and the backup controller can transmit a present set of application state packets of the state transfer within the deadline and given the period, providing, by the control unit, an output message indicating whether the state transfer is feasible on the network according to the scheduling model, and if the state transfer is determined feasible on the network according to the scheduling model, providing the output message to the primary controller.

In an industrial environment industrial control systems host redundant controllers, where a primary controller needs to transfer internal states periodically to a backup, for the backup to be able to assume the primary role without disruption or outputting historically outdated values.

The present invention is at least partly based on the realization that, in controller redundancy systems, reliable state transfer over standard communication networks must be balanced with timing and resource constraints. Specifically, when transmitting state data from a primary to a backup controller, the system must not only ensure delivery within a specified deadline and period, but also account for the overhead introduced by retransmissions due to e.g. packet loss without violating the deterministic nature required in industrial environments.

By incorporating a resend budget into the scheduling model, the proposed method and system accounts for possible retransmissions within the transfer deadline. This improves the retransmission predictability for maintaining determinism in industrial control applications.

The scheduling model is evaluated before deployment to determine whether the current state transfer configuration is feasible over the available network resources.

Advantageously, the proposed state transfer method is hardware-agnostic and only rely on widespread communication means, such as Ethernet and IP-based communication.

A state transfer includes an amount of data in the form of application state packets to be transferred within a deadline and given a period.

The output message may include details of the scheduling model that is found feasible including amount of state data, period, and deadline.

According to an embodiment, the method may comprise determining, by the control unit, a failure rate of the state transfer for a present application, determining, by the control unit, that the failure rate exceeds a threshold, and adjusting, by the control unit, the resend budget so that a desired failure rate is reached. The resend budget may be considered the number of application state packets that can be resent. Given the criticality of the application and its deployment, the resend budget can advantageously be adjusted, and possibly also be used to determine if redundant communication links are needed or not.

According to an embodiment, the resend budget may be increased until the failure rate is below the threshold.

According to an embodiment, the method may comprise acquiring, by the control unit, a security measure for a present deployment of an application, the security measure is associated with an overhead budget on the link for state transfer, wherein the step of applying includes applying the scheduling model to the overhead transfer requirement. That is, the scheduling may account for both time and data size overhead, e.g., increased resources required when applying security measures to the applicate state packets. The security measures may be required for sensitive and critical data which authenticity and integrity should be verifiable and preserved during transmission. It may also be desired to preserve confidentiality of the state data in some cases.

According to an embodiment, wherein multiple applications may be deployed, wherein the scheduling is performed for each application having its own channel on a link over the network. Thus, each state transfer may be considered its own channel on the link, facilitating for the scheduling task by treating the transfers separately. A channel includes information needed for scheduling, for example, a data size, a deadline, and a period for a given transfer.

According to an embodiment, the method may comprise determining, by the control unit, that capacity of the link between the primary and the backup is not sufficient for the state transfer, and provide a recommendation, by the control unit, to reduce the overhead and/or resend budget, and/or alter a deadline and/or a period of the transfer, and/or scheduling the state transfer on more than one link. Advantageously, the control unit may provide an output to a user interface and provide a suggestion on how to proceed to allow the state transfer within the capacity of the link.

According to an embodiment, the method may comprise setting, by the control unit, a prioritization level of the state transfer on the link, and including the prioritization level of the state transfer in the output message to the primary controller. In this way, best-effort traffic may be allowed to co-exist and share the same network as the state transfer data.

According to a second aspect of the invention, there is provided a computer system configured to generate a feasible scheduling of state transfer having a deadline and a period over a network including at least one link from a primary controller running at least one application, to a backup controller, the computer system comprising a control unit configured to: acquire a resend budget over the link for a present application, specifying a number of packets allowed to be resent within the deadline of the state transfer, apply a scheduling model to the state transfer and the resend budget to determine if the network between the primary controller and the backup controller can transmit a present set of application state packets within the deadline and according to the period, provide an output message indicating whether the state transfer is feasible on the network according to the scheduling model, and if the state transfer is determined feasible on the network according to the scheduling model, provide the output message to the primary controller.

According to an embodiment, the control unit may be configured to: determine a failure rate of the state transfer for a present application, determine that the failure rate exceeds a threshold, and adjust the resend budget so that a desired failure rate is reached.

According to an embodiment, the resend budget may be increased until the failure rate is below the threshold.

According to an embodiment, wherein multiple applications may be deployed, wherein the scheduling is performed collectively for all applications having their own channel on a link over the network.

According to an embodiment, the control unit may be configured to: determine that capacity of the link between the primary and the backup is not sufficient for the state transfer, and provide an output recommendation to reduce the overhead and/or resend budget, and/or adjust a period or deadline of the transfer, and/or schedule the state transfer on more than one link.

According to an embodiment, the control unit may be configured to: acquire a security measure for a present deployment of an application, the security measure is associated with an overhead budget on the link for state transfer, wherein the step of applying includes applying the scheduling model to the overhead budget.

According to an embodiment, the computer system may further comprise the primary controller configured to: receive application state data from the application; and transfer application state packets to the backup controller according to the scheduling model. The primary controller thus receives the output message that the scheduling model is usable for the transfer on the link(s), and thereby initiates the application associated with the state transfer. The application state data is split into application state packets by the primary controller.

According to an embodiment, the primary controller may be configured to: apply the security measures to the application state packets to obtain secure application state packets; and transfer the secure application state packets to the backup controller according to the scheduling model. Advantages, the scheduling model already accounts for the security measures that are applied by the primary controller. Security measures may relate to for example encrypting the applicate state packets.

According to an embodiment, the primary controller may be further configured to: transmit a request to the backup controller to confirm reception of a state transfer on one of multiple channels of a link, receive a reception confirmation from the controller, or resend an application state packet in the absence of a reception confirmation.

Further effects and features of the second aspect of the invention are largely analogous to those described above in connection with the first aspect of the invention.

According to a third aspect of the invention, there is provided a computer program product comprising a computer readable medium having stored thereon computer program means for executing the method according to any one of the herein disclosed embodiments.

Further effects and features of the third aspect of the invention are largely analogous to those described above in connection with the first aspect and the second aspect of the invention.

Further features of, and advantages with, the present invention will become apparent when studying the appended claims and the following description. The skilled person realize that different features of the present invention may be combined to create embodiments other than those described in the following, without departing from the scope of the present invention.

### Brief Description of the Drawings

These and other aspects of the present invention will now be described in more detail, with reference to the appended drawings showing an example embodiment of the invention, wherein:
Fig. 1 illustrates a computer system configured to generate a feasible scheduling of state transfer according to an embodiment of the invention;
Fig. 2 is a flow-chart of method steps according to embodiments of the present invention;
Fig. 3 is a flow-chart of method steps according to embodiments of the present invention; and
Fig. 4 is a flow-chart of method steps according to embodiments of the present invention.

### Detailed Description of Example Embodiments

In the present detailed description, various embodiments of the present invention are herein described with reference to specific implementations. In describing embodiments, specific terminology is employed for the sake of clarity. However, the invention is not intended to be limited to the specific terminology so selected. While specific exemplary embodiments are discussed, it should be understood that this is done for illustration purposes only. A person skilled in the relevant art will recognize that other components and configurations can be used without departing from the scope of the invention.

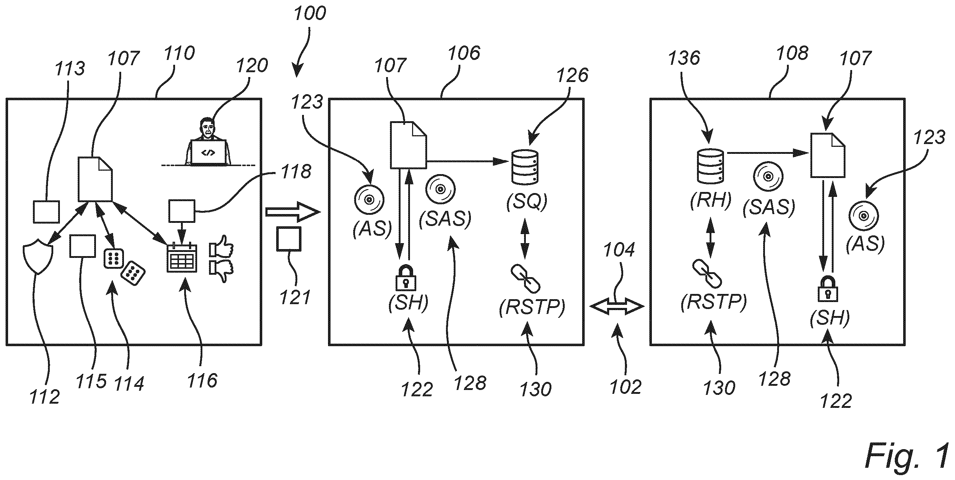

Fig. 1 illustrates a computer system 100 configured to generate a feasible scheduling of state transfer having a deadline and a period over a network 102 including at least one link 104 from a primary controller 106 running at least one application 107, to a backup controller 108.

The computer system 100 comprises a control unit 110 which is configured to run a security module 112, a reliability module 114, and a redundancy link scheduler 116 employing a schedule model 118.

The control unit 110 may be considered comprised in an engineering station where a user may provide input via a user interface 120 to control the primary controller 106 to download and start an application 107 in an industrial environment such as a plant or factory.

Controller redundancy requires that the primary controller 106 synchronize its application states every period to the backup controller 108. This is performed over the network 102 which includes on or more links 104 which may be an Ethernet or IP-communication link.

Furthermore, it is envisaged that the primary controller 106 can transfer its state to more than one backup controller 108.

The reliability module 114 may calculate a failure rate of the state transfer. If the failure rate exceeds a threshold, a resend budget 115 may be adjusted so that a desired failure rate is reached. One input for the failure rate may be the bit error rate of the link 104.

The security module 112 is configured to determine security measures 113 to the state transfer data, such as encryption. The primary controller 106 applies the security measures in the security handler 122 to produce secure application state packets 128 from the application packets 123 produced from application data split into packets. The secure application state packets 128 are transferred to a queue 126 and subsequently to the backup controller 108 using a transfer protocol 130 that adheres to the scheduling model. Secure application state packets 128 may be obtained by encrypting the application state packets 123 using a suitable encryption model.

The primary controller 106 is configured to produce application state packets 123 from application data received from the application 107 and transfer the application state packets 108 to the backup controller according to a scheduling model.

In some embodiments, the primary controller 108 is configured to apply the security measures 113 to the application state packets 123 in the security handler 122 to obtain secure application state packets 128 which are subsequently transferred to the backup controller 108 according to the scheduling model 118. In addition, the primary controller 108 may apply safety measures to the application state packets 123. Examples of safety measure is to use two channels, toggle bits, check sums, etc. to verify the integrity of the data.

The protocol 130 allows for the primary controller 106 to transmit a request to the backup controller 108 to confirm reception of a state transfer on one of multiple channels of a link 104. The primary controller 106 may receive a reception confirmation from the backup controller 108, or the primary controller 106 may resend an application state packet in the absence of a reception confirmation.

At the backup controller 108 a reception handler 136 receives the secure application state packets 128 and places them at the correct offset for each application or channel. Once a complete message is received, it is passed to the application 107. The application 107 uses the security handler 122 to decrypt the received secure application state packets 128 to get the application state packets 123.

The present invention can also be scaled to handle multiple backups 108. This may be achieved by having one protocol instance 130 handling each backup or by letting the protocol instance 130 have knowledge about the backups 108 and keeping track of which ones has acknowledged packets 128. Packets are preferably multi-casted to the backups to save bandwidth.

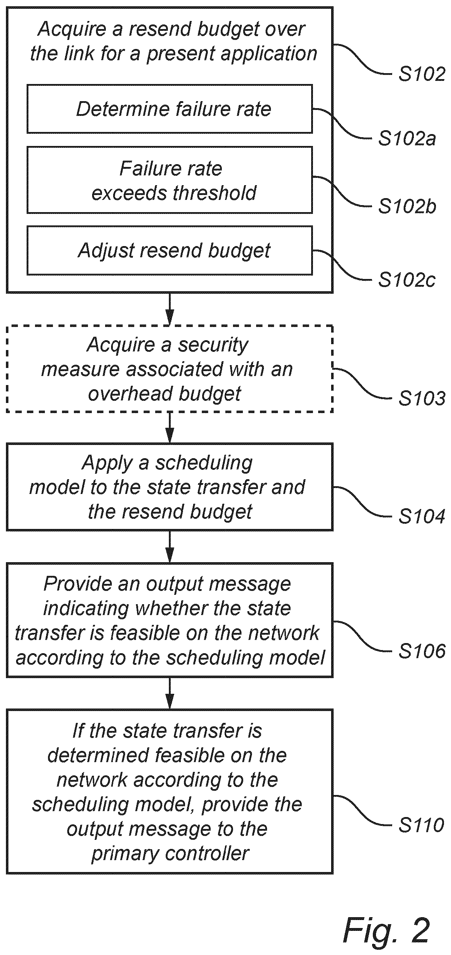

Fig. 2 is a flow-chart of method steps according to embodiments of the present invention. The method is a computer-implemented method in an industrial environment for generating a feasible scheduling of state transfer having a deadline and a period over a network 102 including at least one link 104 from a primary controller 106 running at least one application 107 in the industrial environment, to at least one backup controller 108.

The method comprises, in step S102, acquiring, by a control unit 110 of a computer system 100, a resend budget 115 for a present application, specifying a number of packets allowed to be resent within the deadline of the state transfer.

The resend budget 115 may depend on the criticality of the application and its deployment. A more critical application or deployment thereof may be allowed a larger resend budget.

Step S102 may comprise a step S102a determining, by the control unit, a failure rate of the state transfer for a present application.

Further, step S102b includes determining, by the control unit, that the failure rate exceeds a threshold, and step S102c includes adjusting, by the control unit, the resend budget 115 so that a desired failure rate is reached. Preferably, the resend budget is increased until the failure rate is below the threshold. A larger resend budget requires a longer transfer time. Thus, with the resend budget input to the scheduler 116, an adjusted transfer time can be determined provided a scheduling model 118.

In step S104, applying, by the control unit, a scheduling model 118 to the state transfer and the resend budget 115 to determine if the network 102 between the primary controller 106 and the backup controller 108 can transmit a present set of application state packets of the state transfer within the deadline and given the period.

Different scheduling models exist and one possible model 118 is the *earliest deadline first* model 118 in which the state transfer with the earliest deadline is prioritized. Another scheduling model is the so-called *fixed priority* model. Furthermore, hybrid scheduling models are also envisaged such as earliest deadline first combined with a fixed priority model. For example, fixed priority could provide priority for critical applications whereas earliest deadline first could apply to less critical applications.

In some example embodiments, the method optionally includes step S103 of acquiring, by the control unit, a security measure for a present deployment of an application. The security measure is associated with an overhead budget on the link for state transfer. In this case, the step S104 of applying includes applying the scheduling model also to the overhead transfer requirement.

In a similar way, the safety measures may be applied in step S103, and the safety measures may be associated with an overhead budget that is accounted for in the scheduling model in step S104.

In step S106, providing, by the control unit 110, an output message 121 indicating whether the state transfer is feasible on the network 102 according to the scheduling model 118. The output message includes scheduling details for the state transfer according to the scheduling model 118.

In step S112, if the state transfer is determined feasible on the network 102 according to the scheduling model 118, the output message 121 is provided to the primary controller 106 in step S108. The control unit 110 provides the scheduling details according to the scheduling model 118 to the primary controller 106.

The state transfer is considered feasible if the network 102, or link 104 can transfer the state data, i.e., the application state packets, provided the overhead budget and resend budget, prior to the deadline and given the period of the transfer according to the scheduling model.

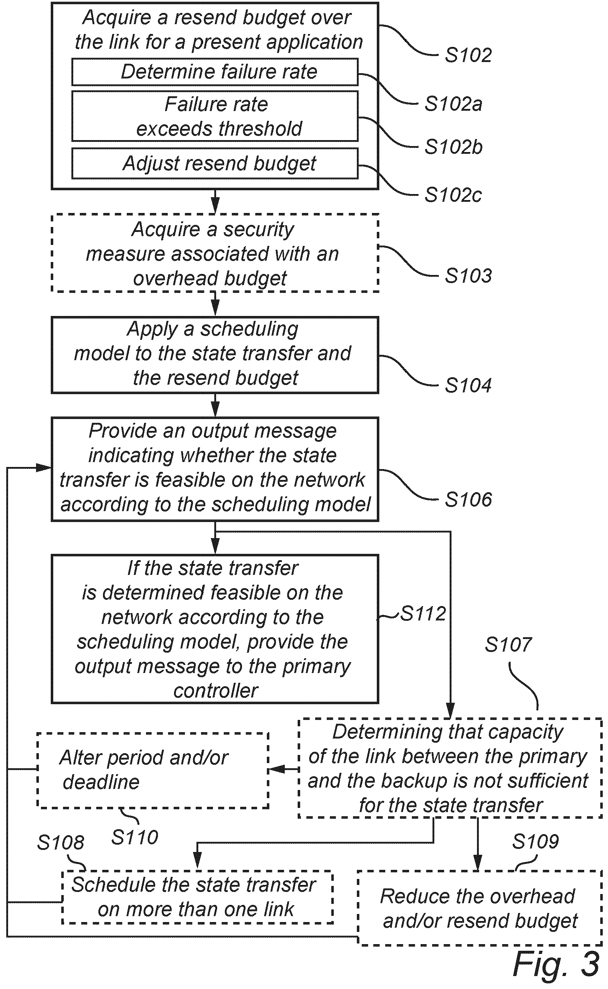

Now turning to the flow chart in fig. 3 which includes the steps of fig 2.

In case the outcome is that the capacity of the link between the primary and the backup is not sufficient for the state transfer, concluded in step S107, the control unit may either, in step S108 provide an output recommendation to reduce the overhead and/or resend budget, and/or alter a period or deadline of the transfer, and/or, in step S109, schedule the state transfer on more than one link 104. The user interface 120 may provide the output recommendation to a user indicating the three options in steps S108, S109 and S110. That is, a user can adjust transfer parameters if needed, such as accepted failure rate, period etc. Once one or more of the options in steps S108 and S109 is/are selected, the output message is provided to the primary controller according to steps S106 and S112.

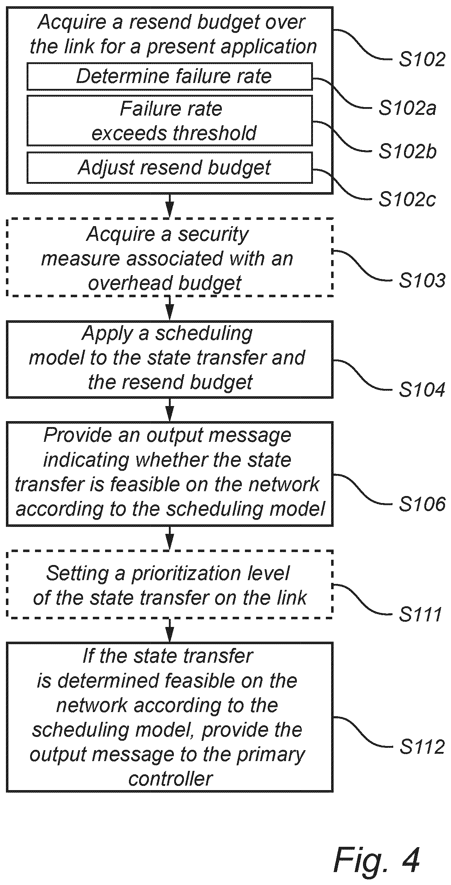

Now turning to the flow chart in fig. 4 which includes the steps of fig 2.

In optional step S111 setting, by the control unit, a prioritization level of the state transfer on the link. This allows the state transfer to coexist with best-effort traffic. Thus, the state transfer is tagged such that it becomes prioritized on the network 102. The prioritization level of the state transfer is included in the output message to the primary controller 106 in step S112.

It is envisaged that multiple applications 107 are being deployed. In this case, the scheduling is performed collectively for all applications each having its own channel on a link 104 over the network. If the scheduling is altered, the alterations that reduce the load on the network should be performed before alterations that increase the load.

A control unit or controller may include a microprocessor, microcontroller, programmable digital signal processor or another programmable device. The control unit may also, or instead, include an application specific integrated circuit, a programmable gate array or programmable array logic, a programmable logic device, or a digital signal processor. Where the control unit includes a programmable device such as the microprocessor, microcontroller or programmable digital signal processor mentioned above, the processor may further include computer executable code that controls operation of the programmable device.

In one or more examples, the functions described may be implemented in hardware, software, firmware, or any combination thereof. If implemented in software, the functions may be stored on or transmitted over as one or more instructions or code on a computer-readable medium and executed by a hardware-based processing unit. Computer-readable media may include computer-readable storage media, which correspond to tangible media such as data storage media, or communication media including any media that facilitate the transfer of a computer program from one place to another, e.g., according to a communication protocol. In this manner, computer-readable media generally may correspond to (1) tangible computer-readable storage media which are non-transitory or (2) a communication media such as signal or carrier waves. Data storage media may be any available media that can be accessed by one or more computers or one or more processors to retrieve instructions, code and/or data structures for implementation of the techniques described in this disclosure. A computer program product may include a computer-readable medium.

By way of example, and not limitation, such computer-readable storage media can comprise RAM, ROM, EEPROM, CD-ROM or other optical disk storage, magnetic disk storage, or other magnetic storage devices, flash memory, or any other medium that can be used to store desired program code in the form of instructions or data structures and that can be accessed by a computer.

Even though the invention has been described with reference to specific exemplifying embodiments thereof, many different alterations, modifications and the like will become apparent for those skilled in the art.

Additionally, variations to the disclosed embodiments can be understood and effected by the skilled person in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage.

## Claims

1. A computer-implemented method in an industrial environment for generating a feasible scheduling of state transfer having a deadline and a period over a network (102) including at least one link (104) from a primary controller (106) configured to run at least one application (107) in the industrial environment, to a at least one backup controller (108), the method comprising:
acquiring (S102), by a control unit (110) of a computer system (100), a resend budget (115) over the link for a present application, specifying a number of packets allowed to be resent within the deadline of the state transfer,
applying (S104), by the control unit, a scheduling model to the state transfer and the resend budget to determine if the network between the primary controller and the backup controller can transmit a present set of application state packets of the state transfer within the deadline and given the period,
providing (S106), by the control unit, an output message (121) indicating whether the state transfer is feasible on the network according to the scheduling model, and
if the state transfer is determined feasible on the network according to the scheduling model, providing (S112) the output message to the primary controller.

2. The method according to claim 1, comprising:
determining (S102a), by the control unit, a failure rate of the state transfer for a present application,
determining (S102b), by the control unit, that the failure rate exceeds a threshold, and
adjusting (S102c), by the control unit, the resend budget so that a desired failure rate is reached.

3. The method according to claim 2, wherein the resend budget is increased until the failure rate is below the threshold.

4. The method according to any one of claims 1-3, comprising:
acquiring (S103), by the control unit, a security measure for a present deployment of an application, the security measure is associated with an overhead budget on the link for state transfer, wherein the step of applying includes applying the scheduling model to the overhead budget.

5. The method according to any one of claims 1-4, wherein multiple applications are being deployed, wherein the scheduling is performed collectively for all applications having their own channel on a link over the network.

6. The method according to any one of claims 1-5, comprising:
determining (S107), by the control unit, that capacity of the link between the primary and the backup is not sufficient for the state transfer, and
providing a recommendation, by the control unit, to reduce (S108 the overhead and/or resend budget, and/or
alter (S110) a period or deadline of the transfer, and/or
schedule (S109) the state transfer on more than one link.

7. The method according to any one of claims 1-6, comprising:
setting (S111), by the control unit, a prioritization level of the state transfer on the link, and
including the prioritization level of the state transfer in the output message to the primary controller.

8. A computer system (100) configured to generate a feasible scheduling of state transfer having a deadline and a period over a network including at least one link from a primary controller running at least one application, to a backup controller, the computer system comprising a control unit configured to:
acquire a resend budget over the link for a present application, specifying a number of packets allowed to be resent within the deadline of the state transfer,
apply a scheduling model to the state transfer and the resend budget to determine if the network between the primary controller and the backup controller can transmit a present set of application state packets within the deadline and according to the period,
provide an output message indicating whether the state transfer is feasible on the network according to the scheduling model, and
if the state transfer is determined feasible on the network according to the scheduling model, provide the output message to the primary controller.

9. The computer system according to claim 8, the control unit being configured to:
determine a failure rate of the state transfer for a present application,
determine that the failure rate exceeds a threshold, and
adjust the resend budget so that a desired failure rate is reached.

10. The computer system according to any one of claims 8-11, the control unit being configured to:
determine that capacity of the link between the primary and the backup is not sufficient for the state transfer, and
provide a recommendation to:
reduce the overhead and/or resend budget, and/or,
alter (S110) a period or deadline of the transfer, and/or
schedule the state transfer on more than one link.

11. The computer system according to any one of claims 8-10, the control unit being configured to:
acquire a security measure for a present deployment of an application, the security measure is associated with an overhead budget on the link for state transfer, wherein the step of applying includes applying the scheduling model to the overhead transfer requirement.

12. The computer system according to any one of claims 8-11, further comprising the primary controller configured to:
receive application state packets from the application; and
transfer the secure application state packets to the backup controller according to the scheduling model.

13. The computer system according to claim 11 and 12, the primary controller being configured to:
apply the security measures to the application state packets to obtain secure application state packets; and
transfer the secure application state packets to the backup controller according to the scheduling model.

14. The computer system according to any one of claims 11-12, wherein the primary controller is further configured to:
transmit a request to the backup controller to confirm reception of a state transfer on one of multiple channels of a link,
receive a reception confirmation from the controller, or
resend an application state packet in the absence of a reception confirmation.

15. A computer program product comprising a computer readable medium having stored thereon computer program means for executing the method according to any one of claims 1-7.
